(19) Europäisches Patentamt
European Patent Office
Office européen des brevets

(11) **EP 1 839 984 B1**

(12) **EUROPÄISCHE PATENTSCHRIFT**

(45) Veröffentlichungstag und Bekanntmachung des Hinweises auf die Patenterteilung:
**24.02.2016 Patentblatt 2016/08**

(51) Int Cl.:
***B60T 8/52*** *(2006.01)*     ***G01L 5/16*** *(2006.01)*
***B64C 25/44*** *(2006.01)*

(21) Anmeldenummer: **07405064.2**

(22) Anmeldetag: **28.02.2007**

(54) **Kraftmessvorrichtung für Fahrzeugfahrwerke**

Power measurement device for vehicle chassis

Dispositif de mesure de force pour véhicules automobiles

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.03.2006 CH 5002006**
            **05.07.2006 CH 10792006**

(43) Veröffentlichungstag der Anmeldung:
**03.10.2007 Patentblatt 2007/40**

(73) Patentinhaber: **Meggitt SA**
**1752 Villars-sur-Glâne (FR)**

(72) Erfinder:
• Perriard, Jacques
1680 Romont (CH)
• Schmid, Felix
1782 Belfaux (CH)

(74) Vertreter: **AMMANN PATENTANWÄLTE AG BERN**
**Schwarztorstrasse 31**
**Postfach 5135**
**3001 Bern (CH)**

(56) Entgegenhaltungen:
DE-A1- 4 035 197     DE-A1- 19 637 614
US-A- 4 474 060     US-A- 4 822 113
US-A1- 2004 221 662

## Beschreibung

Die vorliegende Erfindung bezieht sich auf eine Vorrichtung zur Messung von Kräften in einem Fahrzeugfahrwerk, insbesondere der Bremskraft, gemäss Oberbegriff des Anspruchs 1. Des Weiteren bezieht sie sich auf einen Sensor für eine derartige Vorrichtung.

Die Bremsen von Flugzeugen bestehen aus ineinander verschachtelten Stapeln von Bremsscheiben, die durch hydraulische oder elektrische Aktuatoren aufeinandergepresst werden. Der eine der Stapel ist mit dem jeweiligen Rad verbunden. Der andere Stapel ist zur Aufnahme der Bremskraft mit dem stationären Teil des Fahrwerks verbunden. Für die Übertragung der Bremskraft, d. h. des Drehmoments, das bei Aktivierung der Bremsen auftritt, auf das Fahrwerk ist der zweitgenannte, stationäre Stapel auf geeignete Art gegen Drehung gegenüber dem Fahrwerk arretiert. In der Regel handelt es sich dabei um eine exzentrisch zur Achse des Rades am stationären Stapel angeordnete Befestigungsvorrichtung, im einfachsten Fall eine Bohrung. Ein Bolzen dient dazu, den stationären Stapel mit dem Fahrwerk direkt oder über eine Bremskraftübertragungsstange zu verbinden. Dieser Bolzen wird durch das Drehmoment in Querrichtung hoch belastet und ist daher aus einem hochfesten Material gefertigt. Da er in der Regel einen relativ grossen Durchmesser aufweist, ist er jedoch aus Gewichtsersparnisgründen hohl ausgeführt.

Aus verschiedenen Gründen ist es wünschenswert, die aktuelle Bremswirkung zu messen. Die US-4,474,060 schlägt dazu vor, die Büchse, die normalerweise zwischen dem erwähnten Bolzen und der jeweiligen Aufnahmeöffnung angeordnet ist, als Kraftsensor auszubilden. Diese Lösung hat jedoch den Nachteil, dass damit eine Änderung in den Elementen vorgenommen wird, die der Kraftübertragung dienen, weswegen der Aufwand für die Zertifizierung dieser Lösung erheblich ist. Die Zertifizierung erfordert einen relativ grossen Zeit- und Kostenaufwand und ist darüber hinaus im Extremfall für jeden Flugzeugtyp einzeln durchzuführen.

DE 40 35 197 A1 **offenbart induktive Kraftsensoren am Fahrwerk eines Flugzeuges. Dabei ist eine Spulenanordnung mit einer Schubstange des Fahrwerks durch Halteelemente starr befestigt und erstreckt sich parallel zur Schubstange. Am Fahrwerk auftretende Dehnungen und Stauchungen werden durch an Halteringen befestigte Messzungen an die Spulenanordnung weitergeleitet. Die vorgesehene starre Befestigung der Spulenanordnung und der zusätzlich benötigten Messzungen an speziellen Halteelementen der Schubstange erlaubt ebenfalls kein Einfügen eines derartigen Kraftsensors ohne Neuzertifizierung des Flugzeugfahrwerks.**

Ähnliche Probleme der Messung der Bremskraft können sich auch bei anderen Fahrzeugarten ergeben, die Bremssysteme ähnlich zu denjenigen von Flugzeugen aufweisen. In den Fahrwerken von Flugzeugen und anderen Fahrzeugarten treten noch andere Kräfte auf, deren Messung wünschenswert oder wichtig ist, z.B. durch Bodenunebenheiten, Federung, Dämpfungselemente, Gewicht des Fahrzeugs usw.

Eine Aufgabe der vorliegenden Erfindung besteht daher darin, eine Vorrichtung zur Messung von Kräften in einem Fahrzeugfahrwerk, insbesondere der Bremskraft, anzugeben, die anbringbar ist, ohne Eingriffe in den Übertragungsweg der Bremskraft vornehmen zu müssen.

Eine derartige Vorrichtung ist im Anspruch 1 angegeben. Die weiteren Ansprüche geben bevorzugte Ausführungsformen und Sensoren zur Verwendung in der Vorrichtung an.

Demgemäss weist die Vorrichtung einen Sensor auf, der sich in einem Verbindungselement befindet, das im Allgemeinen stabförmig ist und durch die Kraft oder Kräfte, die zu messen sind, z.B. die Bremskraft, transversal belastet und dabei verformt wird. Insbesondere ist der Sensor ausgebildet, den Abstand der Innenwände des Hohlraums im Verbindungsteil, in dem sich der Sensor befindet, vom Sensor zu bestimmen. Bevorzugt werden hier zu kapazitive oder induktive Distanzmesselemente eingesetzt.

Die Erfindung wird weiter an einem Ausführungsbeispiel unter Bezugnahme auf Figuren erläutert.

Fig. 1     schematische Darstellung eines Flugzeugfahrwerkgestells ("bogie");

Fig. 2     Längsschnitt durch ein Verbindungsteil mit erfindungsgemässem Sensor;

Fig. 3     Querschnitt gemäss III-III in Fig. 2, Verbindungsteil in unbelastetem Zustand;

Fig. 4     wie Fig. 3, aber Verbindungsteil durch Bremskraft belastet;

Fig. 5     Blockschaltbild; und

Fig. 6     Blockschaltbild einer Variante der Schaltung der Fig. 5.

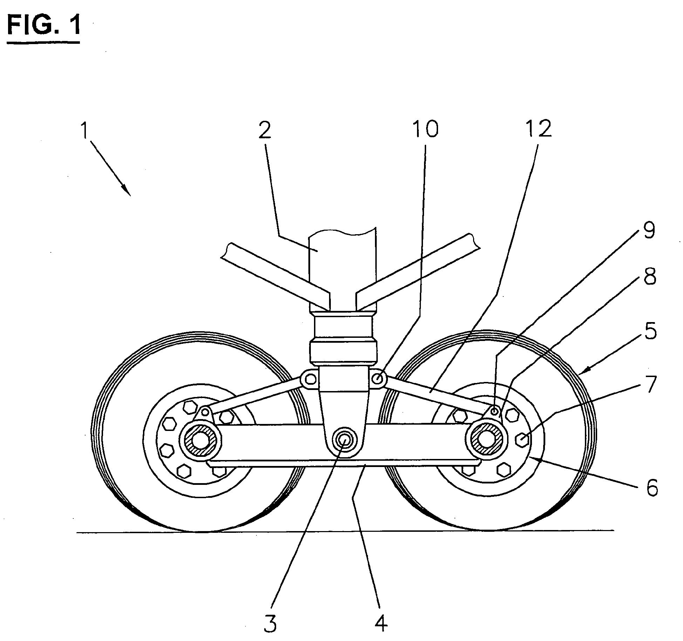

Fig. 1 zeigt den grundsätzlichen Aufbau eines Flugzeugfahrwerks 1. An einem Fahrwerkbein 2 ist in einem Gelenk 3 ein Fahrwerkträger 4 ("bogie train") angebracht. Am Fahrwerksträger befinden sich die Räder 5. An den Rädern 5 sind die Bremsen 6 angebracht, die durch (z. B. hydraulische) Aktuatoren 7 betätigt werden können. Am stationären Scheibenstapel der Bremse 6 ist ein Hebel 8 mit einer Bohrung 9 vorhanden. An der Bohrung 9 wie auch an einem Befestigungspunkt 10 ist die Kraftübertragungsstange 12 befestigt, die während des Bremsvorganges das Bremsdrehmoment von der Bremse 7 auf das Fahrwerk 1 überträgt.

Die dargestellte, grundsätzliche Konstruktion eines Flugzeugfahrwerks entspricht dem Stand der Technik für grössere Flugzeuge. Alternativ zur Verwendung der Kraftübertragungsstange 12, insbesondere bei kleineren Flugzeugen, ist es auch gängig, das Drehmoment direkt von der Bremse auf das Fahrwerk zu übertragen, z. B. über eine direkte Bolzenverbindung.

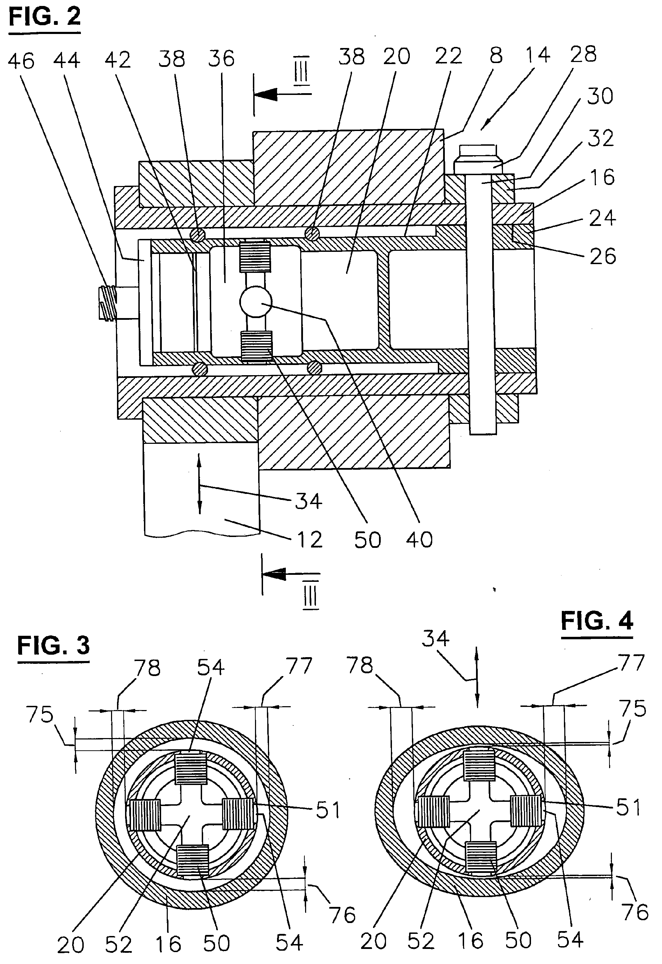

Fig. 2 zeigt im Längsschnitt einen Schnitt durch die Verbindung der Bremskraftübertragungsstange 12 mit dem stationären Teil 14 der Bremse 6, wobei der oben erwähnte Hebel 8 als Teil des stationären Teils 14 aufgefasst wird.

Durch die Bohrung 9 im Hebel 8 sowie durch eine Bohrung 15 am Ende der Bremskraftübertragungsstange 12 verläuft der Bolzen 16. Der Bolzen 16 ist aus einem hochfesten Material hergestellt und zur Gewichtsersparung weitgehend hohl. Bei einer Bremsung wird er jedoch trotzdem merklich verformt. Beobachtet wurden z. B. $^4/_{10}$ mm Verformung bei einem Bolzen von 50 mm Innendurchmesser.

Im Bolzen 16, der hohl ist, befindet sich der Sensor 20. An seinem einen, in der Figur rechten Ende ist das Gehäuse 22 mit Erhebungen ausgestattet oder weist insgesamt einen derartigen Durchmesser aus, dass es sich eng an die Innenwand 26 des Bolzens 16 anschmiegt. Durch den Bolzen 16 wie auch das Ende 24 des Sensors 20 verläuft hier eine Bohrung, durch die ein Stift 28 gesteckt ist. Der Stift 28 ist in einer Bohrung 30 in einem Orientierungsring 32 gehalten, der am Hebel 8, d. h. am stationären Teil 14 der Bremse 6, angebracht ist. Diese Vorrichtung dient dazu, den Sensor in einer vorgegebenen, festen Orientierung relativ zur Bremskraft (Pfeil 34) zu fixieren.

Aussen um den in Fig. 2 linken Teil 36 des Sensors 20 sind O-Ringe 38 angebracht. Sie dienen dazu, diesen Teil des Sensors 20 in etwa zentral zu fixieren und die Verformungen des Bolzens 16 bei Belastung durch die Bremskraft 34 aufzunehmen, da das Gehäuse 22 des Sensors 20 im Wesentlichen starr ist. Im Teil 36 des Sensors 20 befindet sich ein induktives Distanzmesselement 40 und eine zugehörige Versorgungs- und Auswertungsschaltung auf einer Platine 42. Das Sensorgehäuse ist durch eine Scheibe 44 verschlossen, an der sich der elektrische Anschluss 46 befindet, durch den die elektrischen Verbindungen (nicht dargestellt) hergestellt werden.

Wie in Fig. 3 und 4 deutlicher zu sehen, besteht das induktive Messelement 40 im Wesentlichen aus zwei senkrecht zueinander angeordneten Spulenanordnungen 50 und 51, die sich auf einem kreuzförmigen Kern 52 befinden. Der Kern 52 weist eine hohe magnetische Permeabilität auf. Insbesondere besteht er aus einem Stapel weichmagnetischen Materials, um Wirbelströme zu vermeiden, die bei der Wechselstromanregung der Spulenanordnungen 50, 51 entstehen können.

Die Arme 54 des Kerns 52 zusammen mit den äusseren Enden der Spulen 50, 51 sind in entsprechenden Bohrungen bzw. Ausnehmungen des Gehäuses 22 gehalten, so dass die Enden der Arme 54 Teil der Gehäuseoberfläche des Sensors 20 darstellen. Dadurch kann ein vom Kern 52 durch die Arme 54 austretendes magnetisches Feld ungehindert den Sensor verlassen bzw. in ihn eintreten. Um die Ausbreitung eines solchen Magnetfeldes nicht zu stören, besteht das Gehäuse 22 des Sensors 20 wenigstens im Bereich um das induktive Abstandmesselement 40 herum aus einem Material geringer niedriger magnetischer Permeabilität.

Das induktive Abstandsmesselement 40 dient dazu, wie in Fig. 3 und 4 dargestellt, radiale Abstände zwischen Bolzen 16 und Sensor 20 zu messen. Durch die Verformung des Bolzens 16 zu einem Oval (siehe Fig. 4) verringern sich die Abstände in Richtung der Kraft 34 (Abstände 75, 76) bzw. vergrössern sich senkrecht zur Kraft 34 (Abstände 77, 78). Da dies unabhängig davon ist, in welche Richtung längs des Pfeils 34 die Kraft wirkt, erfüllt die Messung auch die oft vorgebracht Forderung, den Betrag der Kraft 34 zu messen.

Obwohl eine einfache Spulenanordnung mit einem stabförmigen Kern für die Messung genügen würde, ist die Anordnung aus zwei kreuzförmig zueinander angeordneten Spulenanordnungen vorgesehen, um die Wirkung der Bremskraft 34 von anderen Einflüssen trennen zu können und zusätzlich eine einfachere Ableitung der Bremskraft aus den Messsignalen des induktiven Abstandsmesselementes 40 zu ermöglichen. Ausserdem werden Fehler aus einer nicht exakt zentrierten Position des Messelements 40 innerhalb des Bolzens 16 unterdrückt.

Für die Verwendung eines induktiven Abstandsmesselementes ist Voraussetzung, dass der Bolzen 16 ebenfalls aus einem Material hoher magnetischer Permeabilität besteht, was heutzutage regelmässig der Fall ist. Die gängigen, hochfesten Materialien für diese Bauelemente weisen in dieser Hinsicht ausreichend magnetische Eigenschaften auf.

Für die Messung werden die Spulenpaare 50, 51 separat mit einem Wechselstrom beaufschlagt und die an den Spulen auftretende Wechselspannung gemessen. Durch eine Synchrondemodulation dieser Spannungen durch eine um 90° verschobene Spannung gleicher Frequenz wird der Imaginäranteil der Spannung erhalten, also der durch die Induktivität hervorgerufene Anteil. Durch die unten detailliert dargestellte Auswertung ist es möglich, daraus ein Messsignal zu erzeugen, dass proportional zur Bremskraft ist:

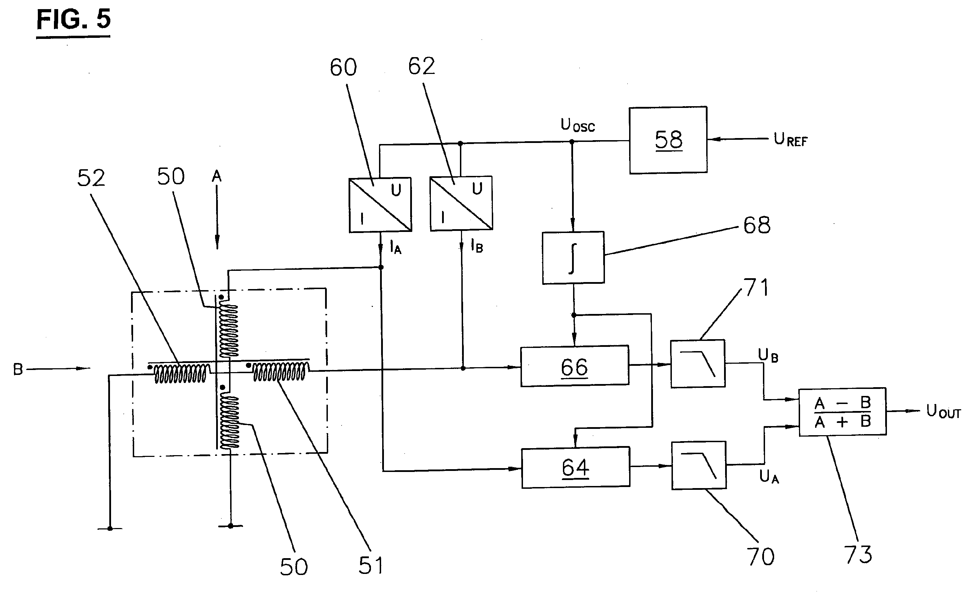

Die Schaltung um das induktive Abstandsmesselement 40 ist in Fig. 5 schematisch dargestellt. Ein Oszillator 58 erzeugt eine Spannung $U_{OSC}$ mit einer Frequenz $\omega$, dessen Amplitude durch eine von aussen vorgegebene Spannung $U_{REF}$ vorgegeben ist. Durch Einstellen von $U_{REF}$ kann eine Temperaturabhängigkeit des induktiven Abstandsmessementes 40 ausgeglichen werden. Hierauf wird im Folgenden nicht weiter eingegangen, denkbar ist jedoch, im Sensor 20 einen Temperaturfühler anzuordnen und in Abhängigkeit von dessen Signal $U_{REF}$ einzustellen.

$U_{OSC}$ wird durch zwei Stromspannungswandler 60, 62 in Ströme $I_A$ und $I_B$ umgewandelt, mit denen die Spulen A 50 und B 51 beaufschlagt werden. Die an A und B auftretenden Spannungen werden Synchrondemodulatoren 64, 66 zugeführt, denen als zweites Signal das durch einen Integrator 68 um 90° verschobene Ausgangssignal $U_{OSC}$ des Oszillators 58 zugeführt wird. Nach jeweiliger Tiefpassfilterung durch die Tiefpässe 70, 71 stehen die Ausgangssignale $U_A$ und $U_B$ zur Verfügung, die jeweils den reinen Induktivitäten der Spulenanordnungen 50, 52 entsprechen, d. h. ohne ohmsche Anteile. Die Tiefpässe 70, 71 dienen dazu, die Trägerfrequenz herauszufiltern. Die beiden Spannungen $U_A$ und $U_B$ werden einer analogen oder digitalen Verarbeitungseinheit 73 zugeführt, die die Differenz der Eingangssignale durch die Summe der Eingangssignale teilt, woraus sich das Ausgangssignal $U_{OUT}$ ergibt. Wie gezeigt wird, ist diese Spannung proportional zur Kraft F, die auf den Bolzen 16 wirkt.

Für die folgende Herleitung wird angenommen, dass sich die Spulenanordnungen A und B jeweils als eine Reihenschaltung einer idealen Induktivität $L_A$ bzw. $L_B$ und einem ohmschen Anteil $R_A$ bzw. $R_B$ ergeben. Im ohmschen Anteil sind dabei Eisenverluste, ohmscher Widerstand der Leitungen usw. zusammengefasst. Die im Folgenden angegebenen Ströme und Spannungen sind, soweit es sich um Wechselspannungen und -ströme handelt, ohne Weiteres als vektorielle Grössen aufzufassen.

Die durch den Strom $I_A$ an der Spulenanordnung A (entsprechend Spulenpaar 50) hervorgerufene Spannung ist:

$$U_A = U_{L_A} + U_{R_A} \qquad\qquad Gl. \; 1$$

und:

$$U_{L_A} = L_A \, I_A \, \omega \qquad\qquad Gl. \; 2$$

mit:

$U_{L_A}$     die von der reinen Induktivität erzeugte Wechselspannungskomponente,
$U_{R_A}$     die von den parasitären, ohmschen Anteilen herrührende Komponente.

Die reine Induktivität LA der Spulenanordnung A ergibt sich zu:

$$L_A = n_A{}^2 \Lambda_A = n_A{}^2 \mu_0 \, \frac{A_{p_A}}{d_A} = \frac{K_A}{d_A} \qquad\qquad Gl. \; 3$$

mit :

$n_A$     Windungszahl von A
$\mu_0$     Magnetische Permeabilität
$A_p$     Polquerschnitt von A
$d_A$     Luftspalt im magnetischen Kreis von A, d. h. die Summe der Abstände 75 und 76 (Fig. 4)
$K_A$     Konstante: $K_A = n_A{}^2 \, \mu_0 \, A_{p_A} / d_A$

Die Änderung des Luftspalts $d_A$, äquivalent der Summe der Abstände 75 und 76, ist näherungsweise proportional zur Bremskraft F:

$$d_A = d_0 + C \, F \qquad\qquad Gl. \; 4$$

mit :

C     Mechanische Konstante, abhängig vom Bolzen 16.
$d_0$     Luftspalt $d_A$ im Ruhezustand (F = 0)

Aus Gleichungen (2), (3) und (4) ergibt sich:

$$U_{L_A} = I_A \; \omega \; K_A \; \frac{1}{d_0 + CF} \qquad\qquad \text{Gl. 5}$$

und durch analoge Herleitung für Spulenanordnung B:

$$U_{L_B} = I_B \; \omega \; K_B \; \frac{1}{d_0 - CF} \qquad\qquad \text{Gl. 6}$$

Bei identischer, symmetrischer Ausführung der Spulenpaare 50, 51 kann weiter gesetzt werden:

$$I_A \; \omega \; K_A = I_B \; \omega \; K_B \qquad\qquad \text{Gl. 7}$$

Unter Einsetzen der Gl. (7) in die Gln. (5) und (6) ergibt sich für $U_{OUT}$:

$$U_{OUT} = \frac{U_{L_A} - U_{L_B}}{U_{L_A} + U_{L_B}} = \frac{K\left[\dfrac{1}{d_0 + CF} - \dfrac{1}{d_0 - CF}\right]}{K\left[\dfrac{1}{d_0 + CF} + \dfrac{1}{d_0 - CF}\right]} = \frac{CF}{d_0} = K_2 \, F$$

$$\text{Gl. 8}$$

Damit ist $U_{OUT}$ proportional zur Bremskraft F.

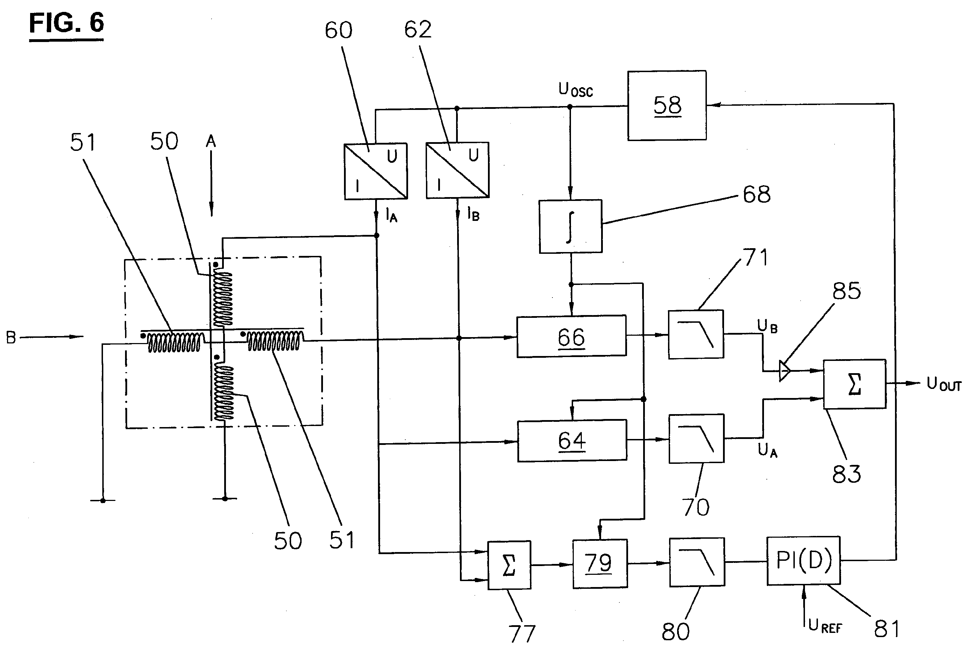

Die Division durch ($U_{LA} + U_{LB}$) in Gl. 8 ist analog nur schwierig durchführbar und auch digital relativ aufwendig. Fig. 6 zeigt eine Variante, in der diese Division vermieden wird, in dem ($U_{LA} + U_{LB}$) konstant gehalten wird.

Die Schaltung der Fig. 6 entspricht weitgehend derjenigen der Fig. 5, namentlich in den mit übereinstimmenden Bezugszeichen versehenen Komponenten.

Abweichend von Fig. 5 werden die Spannungen an den Spulen A 50 und B 52 einem Addierer 77 zugeführt. Die resultierende Summe $U_A + U_B$ wird einem dritten Synchrondemodulator 79 zugeführt, an dessen Ausgang nach adäquater Glättung durch einen Tiefpass 80 die Summe $U_{LA} + U_{LB}$ zur Verfügung steht. Dieses Signal wird einem PI-Regler 81 als Ist-Grösse zugeführt, die Führungsgrösse ist $U_{REF}$. Optional kann das Regelverhalten noch durch das Hinzufügen eines Differentialanteils verbessert werden (PID-Regler).

Der PI- oder PID-Regler 81 steuert die Amplitude des Oszillators 58.

Damit ist der Faktor $\dfrac{1}{U_{L_A} + U_{L_B}}$ konstant, und es ergibt sich:

$$U_{OUT} \star \left(U_{L_A} + U_{L_B}\right) = U_{L_A} - U_{L_B} = \left(U_{L_A} + U_{L_B}\right) K_2 \, F = K_3 \, F$$

$$\text{Gl. 9}$$

mit $K_3$ = constant.

Damit gibt das Ausgangssignal des Summierers 83 mit vorgeschaltetem Inverter 85, d. h. die Differenz $U_{LA} - U_{LB}$, direkt die Kraft F an, und die aufwendige Division wird vermieden. Insbesondere kann diese Variante auch analog ausgeführt werden.

Besonders vorteilhaft am beschriebenen Sensor ist, dass er in die bestehenden Verbindungsbolzen 16 einsetzbar ist, ohne dass dadurch die mechanische Konstruktion auf eine Art verändert werden müsste, die eine neuerliche Zertifizierung verlangt. Ausserdem kann der Sensor vor Ort, also bei der normalen Flugzeugwartung angebracht bzw. überprüft oder ausgewechselt werden.

Aus der vorangehenden Beschreibung eines Ausführungsbeispieles sind dem Fachmann zahlreiche Abwandlungen zugänglich, ohne den Schutzbereich der Erfindung zu verlassen, der allein durch die Ansprüche gegeben ist. Denkbar ist u. a.:

- Einsatz von anderen Abstandsmesselementen als induktiven, z. B. kapazitive oder auf Wirbelstrom basierende Messelemente; bei kapazitiven Elementen wäre in den angegebenen Auswertungsschaltungen eine Beaufschlagung mit Wechselspannung und die Messung des Blindstroms vorzusehen als Äquivalent zur imaginären Komponente des Signals von induktiven Messelementen.

- Anordnung des Messelementes in einem vollständig geschlossenen Gehäuse des Sensors. Dabei kann das Messelement, z. B. der induktive Abstandsensor 40, an einem Träger befestigt sein, der sich im Sensorgehäuse 24 befindet.

- Ausführung des Abstandsensors als zwei separate Sensoren, bevorzugt jedoch in geringem Abstand längs des Bolzens 16, d. h. jeweils nahe des Übergangs der beiden durch den Bolzen verbundenen Teile 12, 14, wo mit der stärksten Verformung des Verbindungsteils (Bolzen 16) durch die auftretenden Kräfte zu rechnen ist;

- Verwendung eines anderen Kernmaterials für das induktive Messelement, z. B. auf der Basis von Ferriten.

## Patentansprüche

1. Vorrichtung zur Messung einer Kraft in einem Fahrzeugfahrwerk, insbesondere der Bremskraft, wobei die Kraft über ein stabförmiges Teil (16) auf das Fahrwerk des Fahrzeugs (1) übertragen wird und das stabförmige Teil durch die Kraft transversal belastet wird, wobei mindestens ein Sensor (20) im Inneren des stabförmigen Teils angebracht ist, der die Verformung des stabförmigen Teils misst, die durch die transversale Belastung verursachbar ist, **dadurch gekennzeichnet, dass** der Sensor (20) ein Gehäuse (24) aufweist, das im stabförmigen Teil (16) anbringbar ist, dass in dem Gehäuse ein Messelement (40) angeordnet ist, und dass das Messelement eingerichtet ist, Signale in Abhängigkeit des radialen Abstands des Messelements von einer Oberfläche des stabförmigen Teils zu messen.

2. Vorrichtung gemäss Anspruch 1, **dadurch gekennzeichnet, dass** das Messelement (40) mindestens zwei Messmittel (50, 51) aufweist, die eingerichtet sind, im wesentlichen orthogonal zueinander ausgerichtete, radial im stabförmigen Teil vorliegende Verformungen zu messen, um verschiedene Typen Verformungen des stabförmigen Teils unterscheiden zu können.

3. Sensor zur Verwendung in einer Vorrichtung gemäss einem der Ansprüche 1 bis 2, **dadurch gekennzeichnet, dass** der Sensor (20) ein Gehäuse (24) aufweist, das am stabförmigen Teil (16) anbringbar ist, dass in dem Gehäuse ein Messelement (40) angeordnet ist, und dass das Messelement eingerichtet ist, Signale in Abhängigkeit des Abstands des Messelements von einer Oberfläche des stabförmigen Teils zu messen.

4. Sensor gemäss Anspruch 3, **dadurch gekennzeichnet, dass** das Messelement (40) ein induktives oder kapazitives oder ein auf Wirbelstromeffekten beruhendes Distanzmesselement ist.

5. Sensor (20) gemäss Anspruch 4, **dadurch gekennzeichnet, dass** der Sensor (20) mindestens ein induktives Distanzmesselement (40) aufweist und das Gehäuse (24) des Sensors niedrige oder keine magnetische Permeabilität aufweist, so dass das Sensorgehäuse im wesentlichen ungehindert vom Magnetfeld des induktiven Distanzmesselements durchdringbar ist.

6. Sensor (20) gemäss einem der Ansprüche 3 bis 5, **dadurch gekennzeichnet, dass** aussen am Gehäuse (24) elastisch deformierbare Fixiermittel (38) vorhanden sind und das Gehäuse im wesentlichen undeformierbar ist, so dass der Sensor im Innern des stabförmigen Teils (16) durch die Fixiermittel auch bei Deformation des stabförmigen Teils im wesentlichen zentriert und undeformiert gehalten wird.

7. Sensor (20) gemäss Anspruch 6, **dadurch gekennzeichnet, dass** die Fixiermittel (38) Ringe aus gummielastischem Material sind.

8. Sensor (20) gemäss einem der Ansprüche 5 bis 7, **dadurch gekennzeichnet, dass** das Messelement mindestens eine Spule (70; 51) auf einem Kern (40) umfasst, der sich im wesentlichen quer durch das Gehäuse erstreckt, und das Gehäuse für ein Magnetfeld hinreichend durchlässig ist, so dass durch die Spule ein Magnetfeld erzeugbar ist, das sich ausserhalb des Sensorgehäuses (24) erstreckt und dessen Stärke durch die räumliche Nähe eines magnetisch leitenden Materials beeinflussbar ist.

9. Sensor (20) gemäss einem der Ansprüche 5 bis 8, **dadurch gekennzeichnet, dass** zwei Messelemente (50, 51) vorhanden sind, die im wesentlichen orthogonal zueinander angeordnet sind, um Verformungstypen eines den Sensor umgebenden stabförmigen Teils (16) unterscheiden zu können.

10. Sensor (20) gemäss einem der Ansprüche 3 bis 9, **dadurch gekennzeichnet, dass** er eine Schaltung zur Ansteuerung des Messelements und/oder Konditionierung des Ausgangssignals enthält.

11. Verwendung des Sensors (20) gemäss einem der Ansprüche 3 bis 10 in einem Hohlbolzen (16) eines Fahrwerks eines Flugzeugs, wobei der Hohlbolzen durch die Kräfte transversal belastet wird.

12. Verwendung des Sensors gemäss einem der Ansprüche 1 bis 10 zur Messung der Bremskraft in einem Fahrwerk eines Flugzeugs.

13. Schaltung für einen Sensor gemäss einem der Ansprüche 4 bis 10, **dadurch gekennzeichnet, dass** die Schaltung enthält:

    - eine Anordnung (60, 62) zum Beaufschlagen der Messelemente mit einer Wechselspannung oder einem Wechselstrom;
    - eine Anordnung zur Bestimmung der im wesentlich rein kapazitiven oder induktiven Komponente als Nutzkomponente des vom Messelement (50, 52) gelieferten Signals.

14. Schaltung gemäss Anspruch 13 für einen Sensor gemäss einem der Ansprüche 9 bis 10, **dadurch gekennzeichnet, dass** die Schaltung enthält:

    eine Anordnung zur Berechnung des Quotienten aus der Differenz der kapazitiven oder induktiven Komponenten der zwei orthogonal zueinander angeordneten Messelemente (50, 51) durch die Summe der beiden Komponenten, wobei die beiden Komponenten mit gleichen Faktoren im wesentlichen proportional zum Kehrwert aus Summe bzw. Differenz von einem Ruhewert $d_0$ und einem Deformierungswert sind.

15. Schaltung gemäss Anspruch 13 für einen Sensor (20) gemäss einem der Ansprüche 9 bis 10, **dadurch gekennzeichnet, dass** zusätzlich vorhanden sind:

    ein Amplitudensteuereingang an der Oszillatoranordnung (60, 62) zum Einstellen der Amplitude der Wechselspannung oder des Wechselstroms;
    eine Anordnung (77) zum Bilden der Summe der Nutzkomponenten der Signale der Messelemente (50, 52);
    eine Vergleichsanordnung (81) zum Vergleichen der Summe der Nutzkomponenten mit einem vorgegebenen Wert und Erzeugen eines Ausgangssignals an einem Ausgang, der mit dem Amplitudensteuereingang der Oszillatoranordnung verbunden ist, um die Summe der Nutzkomponenten konstant zu halten.

16. Schaltung gemäss Anspruch 15, **dadurch gekennzeichnet, dass** eine Messanordnung (83, 85) die Differenz der Nutzkomponenten der von den Messelementen (50, 52) gelieferten Signale bildet.

**Claims**

1. Device for measuring a force in a vehicle undercarriage, more particularly the brake torque, the force being transmitted to the undercarriage of the vehicle (1) by a bar-shaped member (16) and the bar-shaped member being loaded transversely by the force, at least one sensor (20) being arranged in the interior of the bar-shaped member which measures the deformation of the bar-shaped member that is due to the transversal load, **characterised in that** the sensor (20) has an enclosure (24) that is mountable inside the bar-shaped member (16), that a measuring element (40) is arranged in the enclosure, and that the measuring element is configured to measure signals in function of the radial distance of the measuring element from a surface of the bar-shaped member.

2. Device according to claim 1, **characterised in that** the measuring element (40) includes at least two measuring means (50, 51) that are configured to measure radially directed deformations in the bar-shaped member that are essentially orthogonal to each another in order to be able to distinguish different types of deformations of the bar-shaped member.

3. Sensor for use in a device according to one of claims 1 or 2, **characterised in that** the sensor (20) has an enclosure (24) that is attachable to the bar-shaped member (16), that a measuring element (40) is arranged in the enclosure, and that the measuring element is configured to measure signals in function of the distance of the measuring element from a surface of the bar-shaped member.

4. Sensor according to claim 3, **characterised in that** the measuring element (40) is an inductive or capacitive distance measuring element or one based on eddy current effects.

5. Sensor (20) according to claim 4, **characterised in that** the sensor (20) comprises at least one inductive distance measuring element (40) and the enclosure (24) of the sensor has a low or no magnetic permeability such that the sensor enclosure is essentially unrestrictedly permeable to the magnetic field of the inductive distance measuring element.

6. Sensor (20) according to one of claims 3 to 5, **characterised in that** on the outside of the enclosure (24), elastically deformable locating means (38) are provided and the enclosure is essentially indeformable such that the sensor is maintained essentially centred and undeformed in the interior of the bar-shaped member by the locating means even when the bar-shaped member is deformed.

7. Sensor (20) according to claim 6, **characterised in that** the locating means (38) are rings of a rubber-elastic material.

8. Sensor according to one of claims 5 to 7, **characterised in that** the measuring element includes at least one coil (70; 51) on a core (40) that extends essentially transversely through the enclosure and the enclosure is sufficiently permeable to a magnetic field such that a magnetic field can be generated by the coil which extends outside of the sensor enclosure (24) and whose strength can be influenced by the spatial proximity of a magnetically conductive material.

9. Sensor (20) according to one of claims 5 to 8, **characterised in that** two measuring elements (50, 51) are provided which are arranged essentially orthogonally to each other in order to allow distinguishing deformation types of a bar-shaped member (16) that surrounds the sensor.

10. Sensor according to one of claims 3 to 9, **characterised in that** it comprises a circuit for driving the measuring element and/or conditioning its output signal.

11. Use of the sensor (20) according to one of claims 3 to 10 in a hollow bolt (16) of a landing gear of an aircraft, the hollow bolt being loaded transversely by the forces.

12. Use of the sensor according to one of claims 1 to 10 for measuring the brake torque in a landing gear of an aircraft.

13. Circuit for a sensor according to one of claims 4 to 10, **characterised in that** the circuit comprises:

    - an arrangement (60, 62) for applying an alternating voltage or an alternating current to the measuring elements;
    - an arrangement for determining the essentially purely capacitive or inductive component as the useful component of the signal delivered by the measuring element (50, 52).

14. Circuit according to claim 13 for a sensor according to one of claims 9 to 10, **characterised in that** the circuit comprises:

    an arrangement for computing the quotient between the difference of the capacitive or inductive components of the two orthogonally arranged measuring elements (50, 51) and the sum of the two components, the two components being essentially proportional with equal factors to the reciprocal value of the sum respectively the difference of a no-load value $d_0$ and a deformation value.

15. Circuit according to claim 13 for a sensor (20) according to one of claims 9 to 10, **characterised in that** there are further provided:

an amplitude control input of the oscillator arrangement (60, 62) for adjusting the amplitude of the alternating voltage or current;

an arrangement (77) for forming the sum of the useful components of the signals of the measuring elements (50, 52) ;

a comparator arrangement (81) for comparing the sum of the useful components to a predetermined value and generating an output signal at an output connected to the amplitude control input of the oscillator arrangement in order to keep the sum of the useful components constant.

**16.** Circuit according to claim 15, **characterised in that** a measuring arrangement (83, 85) forms the difference of the useful components of the signals delivered by the measuring elements (50, 52).

**Revendications**

**1.** Dispositif de mesure d'une force dans le train de roulement d'un véhicule, notamment la force de freinage, ladite force étant transmise par un élément en forme de tige (16) au train de roulement du véhicule (1) et l'élément en forme de tige étant chargé transversalement par la force de freinage, et au moins un capteur (20) étant agencé à l'intérieur de l'élément en forme de tige, lequel capteur mesure la déformation dudit élément qui peut être occasionnée par la charge transversale, **caractérisé en ce que** le capteur (20) comprend un boîtier (24) pouvant être monté dans l'élément en forme de tige (16), que dans le boîtier est agencé un élément de mesure (40), et que l'élément de mesure est agencé de manière à mesurer des signaux en fonction de la distance radiale séparant l'élément de mesure d'une surface de l'élément en forme de tige.

**2.** Dispositif selon la revendication 1, **caractérisé en ce que** l'élément de mesure (40) comprend au moins deux moyens de mesure (50, 51) agencés de manière à mesurer les déformations radiales orientées en directions essentiellement orthogonales qui sont présentes dans l'élément en forme de tige, afin de pouvoir distinguer différents types de déformations dudit élément en forme de tige.

**3.** Capteur pour utilisation dans un dispositif selon l'une des revendications 1 à 2, **caractérisé en ce que** le capteur (20) comprend un boîtier (24) pouvant être monté sur l'élément en forme de tige (16), que dans le boîtier est agencé un élément de mesure (40), et que l'élément de mesure est agencé de manière à mesurer des signaux en fonction de la distance séparant l'élément de mesure d'une surface de l'élément en forme de tige.

**4.** Capteur selon la revendication 3, caractérisé en ce l'élément de mesure (40) est un élément de mesure de distance inductif, capacitif ou basé sur les effets des courants de Foucault.

**5.** Capteur (20) selon la revendication 4, **caractérisé en ce que** ledit capteur (20) comprend au moins un élément de mesure de distance inductif (40) et que le boîtier (24) du capteur présente une perméabilité magnétique faible ou nulle, de manière que le boîtier du capteur est essentiellement librement perméable au champ magnétique de l'élément de mesure de distance inductif.

**6.** Capteur (20) selon l'une des revendications 3 à 5, caractérisé en ce des moyens de fixation (38) élastiquement déformables sont pourvus à l'extérieur du boîtier (24) et que le boîtier est essentiellement indéformable, si bien que le capteur est retenu par les moyens de fixation à l'intérieur de l'élément en forme de tige (16) de manière essentiellement centrée et non déformée même lorsque l'élément en forme de tige est déformé.

**7.** Capteur (20) selon la revendication 6, **caractérisé en ce que** les moyens de fixation (38) sont des bagues en matériau élastique du genre caoutchouc.

**8.** Capteur (20) selon l'une des revendications 5 à 7, **caractérisé en ce que** l'élément de mesure comporte au moins une bobine (70; 51) enroulée sur un noyau (40) qui s'étend à travers le boîtier essentiellement, et que ledit boîtier est suffisamment perméable à un champ magnétique, de sorte qu'un champ magnétique peut être généré par la bobine lequel s'étend hors du boîtier du capteur (24) et dont l'intensité varie en fonction de la proximité spatiale d'un matériau magnétiquement conducteur.

**9.** Capteur (20) selon l'une des revendications 5 à 8, caractérisé en ce deux éléments de mesure (50, 51) sont pourvus qui sont agencés de manière essentiellement orthogonale l'un par rapport à l'autre, afin de pouvoir distinguer différents types de déformations d'un élément en forme de tige (16) entourant le capteur.

**10.** Capteur (20) selon l'une des revendications 3 à 9, **caractérisé en ce qu'**il comprend un circuit destiné à la commande de l'élément de mesure et/ou au conditionnement du signal de sortie.

**11.** Utilisation du capteur (20) selon l'une des revendications 3 à 10 dans un axe creux (16) du train d'atterrissage d'un avion, l'axe creux étant chargé transversalement par les forces.

**12.** Utilisation du capteur selon l'une des revendications 1 à 10 pour mesurer force de freinage dans le train d'atterrissage d'un avion.

**13.** Circuit pour un capteur selon l'une des revendications 4 à 10, **caractérisé en ce que** ledit circuit contient:

- un agencement (60, 62) permettant d'alimenter les éléments de mesure en tension ou en courant alternatif;
- un agencement permettant de déterminer le composant essentiellement purement capacitif ou inductif en tant que composant utile du signal fourni par l'élément de mesure (50, 52).

**14.** Circuit selon la revendication 13 pour un capteur selon l'une des revendications 9 à 10, **caractérisé en ce que** ledit circuit contient:

- un agencement permettant de calculer le quotient de la différence des composants capacitifs ou inductifs des deux éléments de mesure (50, 51) agencés orthogonalement l'un par rapport à l'autre par la somme des deux composants, lesdits deux composants étant essentiellement proportionnels, avec des facteurs identiques, à la valeur inverse obtenue à partir de la somme ou de la différence d'une valeur au repos $d_0$ et d'une valeur de déformation.

**15.** Circuit selon la revendication 13 pour un capteur (20) selon l'une des revendications 9 à 10, **caractérisé en ce qu'**il comprend en plus:

une entrée de commande d'amplitude de l'agencement oscillateur (60, 62) afin de régler l'amplitude de la tension alternative ou du courant alternatif;
un agencement (77) permettant de former la somme des composants utiles des signaux des éléments de mesure (50, 52) ;
un agencement comparateur (81) permettant de comparer la somme des composants utiles à une valeur prédéterminée et à générer un signal de sortie à une sortie reliée à l'entrée de commande d'amplitude de l'agencement oscillateur afin de maintenir constante la somme des composants utiles.

**16.** Circuit selon la revendication 15, **caractérisé en ce qu'**un agencement de mesure (83, 85) forme la différence des composants utiles des signaux fournis par les éléments de mesure (50, 52).

EP 1 839 984 B1

FIG. 1

11

# FIG. 2

46 44 42 38 36     38 20 22 8 14 28

30

32

16

24

26

34

12   50   40

III

III

# FIG. 3

# FIG. 4

75 78 54 77     34     78 77 75

51     51

76     76

20 52 16 50 54     20 52 16 50 54

## FIG. 5

EP 1 839 984 B1

**FIG. 6**

**IN DER BESCHREIBUNG AUFGEFÜHRTE DOKUMENTE**

**In der Beschreibung aufgeführte Patentdokumente**

- US 4474060 A
- DE 4035197 A1